(19) Europäisches Patentamt
European Patent Office
Office européen des brevets

(11) EP 1 606 581 B1

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
**G01C 15/00** *(2006.01)*    **G01C 1/04** *(2006.01)*
**G01C 11/02** *(2006.01)*

(21) Anmeldenummer: **04721531.4**

(22) Anmeldetag: **18.03.2004**

(86) Internationale Anmeldenummer:
**PCT/EP2004/002800**

(87) Internationale Veröffentlichungsnummer:
**WO 2004/083779 (30.09.2004 Gazette 2004/40)**

(54) **VERFAHREN UND VORRICHTUNG ZUR BILDVERARBEITUNG IN EINEM GEOD&Auml;TISCHEN MESSGER T**

METHOD AND DEVICE FOR IMAGE PROCESSING IN A GEODESICAL MEASURING APPLIANCE

PROCEDE ET DISPOSITIF DE TRAITEMENT D'IMAGE D'UN APPAREIL DE MESURE GEODESIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **21.03.2003 US 456371 P**
**27.05.2003 EP 03011908**

(43) Veröffentlichungstag der Anmeldung:
**21.12.2005 Patentblatt 2005/51**

(73) Patentinhaber: **Leica Geosystems AG**
**9435 Heerbrugg (CH)**

(72) Erfinder: **WALSER, Bernd**
**CH-9435 Heerbrugg (CH)**

(74) Vertreter: **Kaminski Harmann**
**Patentanwälte AG**
**Landstrasse 124**
**9490 Vaduz (LI)**

(56) Entgegenhaltungen:
**DE-A- 19 922 321**

**Beschreibung**

Die Erfindung betrifft ein Verfahren und eine Vorrichtung zur geodätischen Vermessung eines Objekts mit Hilfe von Bildverarbeitung unter Verwendung eines geodätischen Messgeräts.

Für die Aufnahme von Eigenschaften definierter Punkte in einer Messumgebung, insbesondere von Daten mit räumlichem Bezug, ist seit der Antike eine Vielzahl von Messvorrichtungen bekannt. Als räumliche Standarddaten werden dabei der Ort eines Messgerätes nebst evtl. vorhandener Referenzpunkte, sowie Richtung, Entfernung und Winkel zu Messpunkten aufgenommen. Bisherige Verbesserungen betrafen meist den Einsatz neuer technischer Verfahren mit erhöhter Genauigkeit und Schnelligkeit.

Allerdings erfordern derartige Vorrichtungen des Stands der Technik immer noch die direkte Ausrichtung eines Messgeräts auf den zu vermessenden Punkt. Dies erfolgt meist mit Hilfe von speziellen Richtmitteln, wie z.B. optischen Teleskopen. Ein allgemein bekanntes Beispiel für solche Messgeräte stellt der Theodolit dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999 und "Electronic Distance Measurement" von J.M. Rüeger, 4. Auflage, Springer-Verlag, Berlin, Heidelberg 1996.

Durch die Kombination eines geodätischen Gerätes mit einem gegenüber diesem Gerät beweglichen oder unabhängig verbringbaren Bildschirm können Vorteile in ergonomischer und messtechnischer Hinsicht erreicht werden. Dabei wird das konventionelle Okular des Fernrohrs durch elektronische Aufnahmemittel ersetzt, so dass die bisher notwendige Bindung des Bedieners an das Gerät, wie auch die aufgrund der Nutzung des menschlichen Auges resultierenden Anforderungen oder Beschränkungen aufgehoben werden können. Die Steuerung des Gerätes und der damit durchzuführenden Messungen erfolgt elektronisch über die Anzeige des Bildschirms und eine geeignete Eingabevorrichtung für Daten und Steuerbefehle. Die Messungen können dann nach erfolgter Ausrichtung mit verschiedenen Verfahren, wie z.B. durch Messung der Winkelablage mit ergänzender Entfernungsmessung durch Triangulation oder mittels Laser, durchgeführt werden.

Aus den Patentschriften JP 02130409 A und JP 03167412 A ist die Kombination eines Theodoliten mit einer Video-Kamera bekannt, mit der schnelle und genaue dreidimensionale Messungen ermöglicht werden sollen. Hierbei werden durch zwei Theodolit-Video-ICamera-ICombinationen zeitgleich Aufnahmen von Bildern durch die jeweilige Kamera und Winkelmessungen mittels Theodoliten vorgenommen. Dabei sind jeweils die Achsen von Video-Kamera und Theodolit parallel, so dass die Winkelmessung eines Theodoliten mit den durch die Kamera dieser Kombination aufgenommenen Bildern verknüpft ist. Aus mindestens zwei unter verschiedenen Winkeln aufgenommenen Bildern können die dreidimensionalen Positionen der abgebildeten Objekte abgeleitet werden.

Aus der Europäischen Patentanmeldung EP 0 481 278 und dem zugehörigen Deutschen Gebrauchsmuster DE 90 07 731 U ist eine Messeinrichtung zur Positionsbestimmung opto-elektronisch darstellbarer Raumpunkte bekannt. Die Messeinrichtung verfügt über einen bewegbaren Messkopf mit einer Kamera als Zielerfassungsgerät und einem Entfernungsmessgerät, deren Zielachsen präzise aufeinander ausgerichtet sind. Ein Zielpunkt wird vermessen, indem dieser mit der Kamera erfasst und nachfolgend die Kameraachse auf den Zielpunkt ausgerichtet wird. Damit ist auch eine präzise Ausrichtung des Entfernungsmessgeräts verbunden, so dass dessen Achse ebenfalls auf den zu vermessenden Punkt weist.

In der Europäischen Patentanmeldung mit der Anmelde-Nr. 01127378 derselben Anmelderin wird ein Messgerät beschrieben, bei dem durch eine Trennung von Aufnahme- und Darstellungsmitteln eine Bedienung in ergonomisch vorteilhafter Weise ermöglicht wird. Durch eine geeignete Zusammenfassung der Darstellungsmittel mit den Mitteln zur Eingabe von Daten kann ein eigenes Handhabungsmodul geschaffen werden, das auch unabhängig und abgesetzt vom Messgerät verwendet werden kann und mit diesem über Kommunikationsmittel in Verbindung steht. Die Verwendung eines solchen Moduls zusammen mit mehreren Messgeräten als Sensorkomponenten erlaubt die Gestaltung fernbedienbarer geodätischer Vermessungssysteme. Innerhalb eines dargestellten Messbereichs ist eine Positionsmarke verschiebbar, über die Parameter eines Messvorgangs festgelegt und der Messvorgang ausgelöst werden kann. Der nachfolgende Messvorgang richtet die zur Messung benötigten Komponenten des Messgerät auf die durch die Positionsmarke bestimmte Position aus und die Messung wird durchgeführt.

Aus der Internationalen PCT-Anmeldung WO 99/60335 ist eine geodätische Vorrichtung bekannt, die einen Zielbereich mit einer Kamera erfasst und auf einem Bildschirm darstellt. Innerhalb dieses Bereichs können Ziele ausgewählt und deren Entfernung durch einen Entfernungsmesser gemessen werden, indem der Entfernungsmesser als vollständiges Gerät mit seiner Achse auf das gewählte Ziel ausgerichtet wird. Dabei werden Kamera und Entfernungsmesser entweder gemeinsam oder unabhängig voneinander durch Motoren bewegt.

In der Europäischen Patentanmeldung mit der Anmelde-Nr. 02022820 wird ein geodätisches Messgerät dargestellt, bei dem eine Bewegung des zur Messung benötigten Strahlenbündels innerhalb des Erfassungsbereichs einer Optik bewirkt wird, ohne hierfür eine sonst notwendige Bewegung der gesamten Optik oder grösserer Komponenten zu erfordern. Ermöglicht wird dies durch die Verwendung von optischen Komponenten der elektronischen Aufnahmemittel zur Emission des Strahlungsbündels. Mit der über die Optik der Aufnahmemittel emittierten Strahlung können grundsätzlich alle erfassten und in der Darstellung angezeigten Ziele vermessen werden, ohne dass die optische Achse der Aufnahmemittel oder eine weitere eigenständige Komponente des Messgerätes bewegt werden muss. Die Aufnahmemittel betreffen dabei die Vorrichtungen zur Bilderzeugung, die für eine Festlegung des Zielpunktes für einen Messpunkt verwendet werden. Die zur Durchführung der Messung notwendigen Detektoren können auch in weiteren Messgeräten eingebaut sein, so dass beispielsweise durch ein Messgerät mit einer solchen elektronischen Anzeige- und Steuervorrichtung eine Festlegung und Beleuchtung eines Ziels mit Strahlung erfolgt, die Messung wird jedoch von einem oder mehreren weiteren Geräten durchgeführt.

Alle dargestellten Vorrichtungen des Stands der Technik erfordern für jede Messung zu einem Punkt das Vermessen des Punktes durch erneute Ausrichtung einer Messvorrichtung und Aussendung eines Signals. Damit müssen für jeden Messvorgang Komponenten des Messgerätes bewegt und ausgerichtet werden. Gerade für feldtaugliche Systeme sind aber die Komplexität des Messgerätes und des Messvorganges hochrelevante Grössen, so dass deren Reduzierung unmittelbare Vorteile mit sich bringt. Darüber hinaus führt das häufige Bewegen von Teilen zu Verschleiss bzw. erfordert eine verschleissmindernde oder verschleissnresistente technische Auslegung der Komponenten.

Einen weiteren Nachteil stellt die Notwendigkeit dar, dass jedes Gerät jeweils über eigene Richtmittel verfügen muss, um die Achse des Messgerätes oder der Messstrahlung auf ein Ziel auszurichten. Selbst wenn für eine spezielle Vermessungsaufgabe stets alle Ziele innerhalb des Erfassungsbereichs der Aufnahmemittel liegen, so muss für jeden Messvorgang eine punktweise Ausrichtung bzw. Anzielung und nachfolgende Vermessung erfolgen.

Auf der anderen Seite kann durch die spezielle Gestaltung von zu vermessenden Zielpunkten, z.B. durch Verwendung von Reflektoren als sogenannte kooperative Ziele, eine zumindest teilweise automatisierte Vermessung erreicht werden. Allerdings ist hierfür eine Anbringung der anzumessenden kooperativen Ziele auf den zu vermessenden Punkten notwendig, was sich insbesondere in erhöhtem Aufwand niederschlägt. Darüber hinaus ist eine Verwendung von kooperativen Zielen nicht unter allen Umständen möglich, wie z.B. bei der Vermessung unzugänglicher Orte. Auch erfordert der automatisierte Zielsuch- und Ausrichtvorgang einen erhöhten technischen und zeitlichen Aufwand.

Die Deutsche Patentanmeldung DE 199 22 321 A1 zeigt ein Verfahren jnd eine Anordnung zur Durchführung von geodätischen Messungen mittels Videotachymeter. Auf einem Display des Videotachymeters kann ein angezielter Objektpunkt betrachtet werden. Eine Koordinate des auf dem Display betrachteten Objektpunkts lässt sich mittels Per festlegen. Dieser Koordinate auf dem Display wird eine Koordinate auf der CCD-Matrix des Videotachymeters zugeordnet. Dazu wird mit einem Cursor ein Objekt auf dem Display markiert. und auf dem Bedienfeld werden mit geometrischen Formen belegte Tasten bedient, woraufhin eine Software des Videotachymeters im markierten Objekt nach einer entsprechenden geometrischen Form sucht. Bei erfolgreicher Suche wird durch betätigen einer weiteren Taste des Bedienfelds das markierte gesuchte Objekt gelangen. Das Videotachymeter misst eine Distanz sowie einen Horizontalwinkel und einen Vertikalwinkel zum Objekt und ermöglicht mit diesen Messdaten eine Zuordnung der aus dem Bildinhalt der CCD-Matrix extrahiert geometrischen Objekte zu Objektpunkten in einem Objektraum.

Eine Aufgabe besteht somit darin, eine semiautomatisierte Vermessung nicht kooperativer, jedoch strukturierter Ziele zu ermöglichen.

Eine weitere Aufgabe besteht darin, eine Vermessung nicht kooperativer Ziele innerhalb eines gewissen Bereichs ohne mechanisches Verstellen einer Komponente des Messgeräts zu ermöglichen.

Eine weitere Aufgabe besteht in der Vereinfachung des Aufbaus eines gattungsgemässen geodätischen Messgerätes.

Eine weitere Aufgabe besteht in der Verringerung des zeitlichen und energetischen Aufwandes bei der Nutzung eines gattungsgemässen geodätischen Messgerätes.

Diese Aufgaben werden durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Lösung nutzt die elektronische Aufnahme eines erfassten Beobachtungsbereichs. Dazu werden Bilddaten verwendet, welche mit einem geodätischen Messgerät, beispielsweise einem Theodoliten oder Tachymeter, aufgenommen wurden. Damit die Bilddaten zur Vermessung des Objekts herangezogen werden können, muss das gesamte Messgerät-Bildsensor-System kalibriert werden. Ein solches Video-Messgerät-System kann nun verwendet werden, um beliebige strukturierte Objekte zu vermessen. Der Vermesser ist nicht mehr auf aktive oder kooperative Ziel angewiesen, um eine semi-automatisierte Punktbestimmung durchzuführen. Durch Einbindung des Vermessers in den semi-automatisierten Messvorgang wird eine ideale Verknüpfung von einerseits der Steuerung durch den Menschen und andererseits der Zuverlässigkeit von Algorithmen erreicht. Templates in Form von Vorlagen, die das zu vermessende Objekt zumindest teilweise beschreiben, unterstützen den Vermesser bei der Auswahl der zu vermessenden Zielpunkte der Objekte. Die 3. Dimension des Objekts wird, sofern erforderlich, mittels einer reflektorlosen Distanzmessung bestimmt.

Unter dem Begriff "geodätisches Messgerät" soll in diesem Zusammenhang verallgemeinernd stets ein Messinstrument verstanden werden, das über Vorrichtungen zur Messung oder Überprüfung von Daten mit räumlichem Bezug verfügt. Insbesondere betrifft dies die Messung von Richtungen bzw. Winkeln und/oder Entfernungen zu einem Bezugs- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können. Insbesondere sollen hier unter einem solchen geodätischen Messgerät Theodoliten, sogenannte Totalstationen als Tachymeter mit elektronischer Winkelmessung und elektrooptischem Entfernungsmesser, und Nivelliere verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung. Diese Systeme werden hiermit ebenfalls unter dem Begriff "geodätisches Messgerät" erfasst.

Das geodätische Messgerät verfügt über elektronische Aufnahmemittel, die innerhalb eines Erfassungsstreifens Objekte, vor allem ein zu vermessendes Objekt, in Form eines Aufnahmebildes erfassen. Die Aufnahmemittel beinhalten beispielsweise eine CCD-Kamera, eine CMOS-Kamera, eine Video-Kamera, einen Restlichtverstärker oder eine Wärmebildkamera. Die exakte Winkelausrichtung des Erfassungsstreifens wird ermittelt, indem vorzugsweise die Ausrichtung der Aufnahmemittel und/oder eines Objektivs der Aufnahmemittel mittels Winkel-Encodern des geodätischen Messgeräts bestimmt wird. Ein erfasstes Aufnahmebild oder ein Teilbereich dieses Aufnahmebildes wird in Form eines Darstellungsbildes über Darstellungsmittel sichtbar gemacht. Die Darstellungsmittel weisen insbesondere ein LC-Display, eine Kathodenstrahlröhre, einen Flachbildschirm, eine Schnittstelle zu Kommunikationsnetzen und/oder einen elektronischen Rechner mit Bildschirm, vorzugsweise ausgebildet als Notebook oder Laptop, auf. Anschliessend wird mindestens eine Darstellungsbild-Koordinate festgelegt, beispielsweise durch Positionieren eines Cursors auf den Darstellungsmitteln. Das Positionieren erfolgt insbesondere über Eingabemittel, z.B. in Form eines Tastaturfeldes, eines Joy-Sticks, eines Trackballs, einer Computer-Maus, eines berührungssensitiven Eingabefelds, einer Schnittstelle zu Kommunikationsnetzen und/oder über eine mit den Darstellungsmitteln kombinierte Einheit, insbesondere einen berührungssensitiven Bildschirm oder einen elektronischen Rechner mit Eingabevorrichtung, vorzugsweise ausgebildet als Notebook, Laptop oder Handheld-PC, insbesondere Palm-PC. Die festgelegte Darstellungsbild-Koordinate wird direkt oder indirekt einer Aufnahmebild-Koordinate zugeordnet, die wiederum in mindestens eine geodätische Messgrösse, insbesondere einen Raumwinkel, vorzugsweise einen Horizontal- und einen Vertikalwinkel, transformiert wird. Dabei erfolgt die Transformation unter Berücksichtigung der Aufnahmebild-Koordinate, der Winkelausrichtung des Erfassungsstreifens der Aufnahmemittel, der Fokusposition, des Abbildungsmassstabs, der optischen Fehler und/oder der temperaturabhängigen Ablagen.

Unter der geodätischen Messgrösse sind neben Winkeln und Distanzen beispielsweise einerseits die Koordinaten oder Komponenten eines Punktes in einem beliebigen Koordinatensystem, insbesondere einem Polarkoordinatensystem, andererseits relative Beziehungen zwischen einzelnen Punkten, insbesondere Distanzen oder Winkel zwischen Objektpunkten, zu verstehen.

Die Aufnahmebild-Koordinate wird bestimmt, indem der Vermesser zunächst ein Template in Form einer Vorlage, welche das geodätisch zu vermessende Objekt zumindest teilweise modelliert, aufruft. Das Template wird auf dem Darstellungsbild näherungsweise positioniert, indem der Vermesser z.B. mindestens eine Darstellungsbild-Koordinate durch Positionieren eines Cursors auf den Darstellungsmitteln festlegt. Das näherungsweise positionierte Template wird erfindungsgemäss über Matching an das aufgenommene und geodätisch zu vermessende Objekt angepasst. Gegebenenfalls nach Auswahl eines charakteristischen Punktes des angepassten Templates, beispielsweise eines Endpunkts, Eckpunkts, Schnittpunkts, Mittelpunkts, etc., wird die Aufnahmebild-Koordinate bestimmt, worauf im Anschluss die oben erwähnte Transformation erfolgt.

Unterschiedliche Verfahren des Matchings, insbesondere des Template Matchings, sind aus dem Stand der Technik bekannt, beispielsweise aus der modellbasierten, automatischen oder halbautomatischen Objekterkennung und Segmentierung, bei der auch eine Klassifikation interessanter Regionen, sogenannter regions of interest, möglich ist.

Das beschriebenen erfindungsgemässe Verfahren wird beispielsweise in Form eines Computerprogrammprodukts, insbesondere als Software oder Firmware, gespeichert und von Berechnungsmitteln, insbesondere einem Personalcomputer, einem Laptop, einem Notebook, einem Einplatinencomputer oder einer sonstigen elektronischen Rechen- und Steuerungseinheit, ausgeführt.

Die Daten und Ergebnisse des Messvorgangs können auf den Darstellungsmitteln dargestellt werden. Diese Darstellung ist dabei in Form einer eingeblendeten Schrift oder auch in eigenen Darstellungsfeldern möglich. Letztere können als getrennte Teile des Bildschirms ausgeführt sein, die beispielsweise vergrösserte Bildausschnitte abbilden.

Die Verwendung eines berührungssensitiven Flachbildschirmes erlaubt darüber hinaus auch den Verzicht auf spezielle Eingabemittel, so dass die Darstellungs- und Eingabemittel kompakt und modular ausgeführt werden können. Eine weitere Realisierungsmöglichkeit der Darstellung- bzw. Eingabemittel besteht in der Anbindung an auch für andere Anwendungen nutzbare Geräte. Beispielsweise kann über eine Schnittstelle für Kommunikationsnetze oder die Verwendung eines Standardcomputers, insbesondere eines tragbaren Laptops oder Notebooks, auf weitere zusätliche Funktionalitäten zurückgegriffen werden. Durch eine Verwendung von Rechnern kann zusätzliche, gegebenenfalls universell einsetzbare Software zum Einsatz gebracht werden. Ausserdem können aufgenommenen Messdaten sofort in den verfügbaren Speichern abgelegt und nach Trennung vom geodätischen Messgerät auch in anderen Applikationen verwendet werden. Diese Vorteile können mit einer Internetanbindung kombiniert werden, durch die eine ergänzende Datenübertragung oder Fernsteuerung möglich wird.

Die Auftrennung eines bisher mit einem direkten Einblick versehenen Teleskops des geodätischen Messgeräts in Aufnahme- und Darstellungsmittel ermöglicht es dem Benutzer ausserdem, unabhängig von der Ausrichtung der Aufnahmemittel, eine bequeme, ergonomisch günstige Position einzunehmen. Auch kann ein Messgerät in Bereichen platziert werden, die bisher nicht nutzbar waren, z.B. in Ecken oder engen Durchlässen.

Werden die Darstellungs- und Eingabemittel modular ausgestaltet, können sie baulich vom eigentlichen geodätischen Messgerät getrennt werden. Eine Verbindung zum geodätischen Messgerät, das nun im wesentlichen nur noch aus einem Gehäuse und den Komponenten des Objektivs mit Sensorelementen zusammen mit den zugehörigen Steuerkomponenten besteht, kann über Kommunikationsmittel hergestellt werden, z.B. Draht- oder Funkverbindungen. In diesem Zusammenhang sollen im folgenden unter Drahtverbindungen stets alle flexiblen Kommunikationsverbindungen verstanden werden, die zur Übertragung von Daten dienen, insbesondere jedoch Glasfaser- und Kupferkabel.

Diese Auftrennung erlaubt ausserdem die Steuerung einer Vielzahl von geodätischen Messgeräten als reine Sensoreinheiten mittels einer zentralen Steuer- und Auswerteeinheit. Letztere kann vor der Witterung geschützt z.B. in einem Fahrzeug untergebracht werden. Neben den Vorteilen für Gerät und Bediener erlaubt die Unterbringung in einem Fahrzeug auch die Verwendung von weiteren Zusatzkomponenten, die bei einer Anbringung am einzelnen Messgerät dessen Gewicht prohibitiv erhöhen würden. Die Verwendung mehrerer Sensoreinheiten erlaubt vereinfachte, gleichzeitige Messungen zu gemeinsamen oder verschiedenen Punkten, eine Ausrichtung der geodätischen Messgeräte untereinander oder auch einen überschlagenden Einsatz, bei dem stets nur ein Teil der Sensoreinheiten für Messungen verwendet wird, während der andere Teil an andere Standorte verbracht wird. Die Darstellung der Messbereiche von gleichzeitig genutzten Sensoreinheiten kann nacheinander auf dem gleichen Bildschirm oder aber auch zeitgleich auf einem Bildschirm in eigenen Darstellungsbereichen, z.B. in Fenster- oder Split-Screen-Technik, erfolgen.

Im Folgenden werden ein erfindungsgemässes Verfahren, eine erfindungsgemässe elektronische Anzeige- und Steuervorrichtung, ein erfindungsgemässes geodätisches Messgerät und ein erfindungsgemässes Computerprogrammprodukt rein beispielhaft in Form von konkreten Ausführungsbeispielen durch Darstellung des Messsystems, des Transformationsmodells, der Kalibrierungen und des Messverfahrens unter Zuhilfenahme von Figuren genauer beschrieben. In der anschliessenden Figurenbeschreibung wird teilweise auf Bezugszeichen bereits zuvor beschriebener Figuren zurückgegriffen. Im einzelnen zeigen

Fig. 1	eine Darstellung eines geodätischen Messgeräts mit Aufnahmemitteln und einer getrennt angeordneten elektronischen Anzeige- und Steuervorrichtung;

Fig. 2	eine Darstellung eines geodätischen Messgeräts mit Aufnahmemitteln und einer integrierten elektronischen Anzeige- und Steuervorrichtung;

Fig. 3	ein Transformationsmodell zur Transformation einer Aufnahmebild-Koordinate in einen Polarwinkel eines erfassten Objekts;

Fig. 4	ein Darstellungsbild auf den Darstellungsmitteln mit einem Template-Auswahlmenü und einer festgelegten Darstellungsbild-Koordinate;

Fig. 5	ein Darstellungsbild auf den Darstellungsmitteln mit einem Template-Auswahlmenü und einem platzierten Template;

Fig. 6	ein Darstellungsbild auf den Darstellungsmitteln mit einem Template-Auswahlmenü und durch lokales Matching erzeugten Abgleichpunkten und Richtungsvektoren;

Fig. 7	ein Darstellungsbild auf den Darstellungsmitteln mit einem Template-Auswahlmenü und gefitteten Geraden mit einem charakteristischen Punkt; und

Fig. 8	ein Darstellungsbild auf den Darstellungsmitteln mit einem Template-Auswahlmenü und automatisch exakt platzierten Templates mit charakteristischen Punkten.

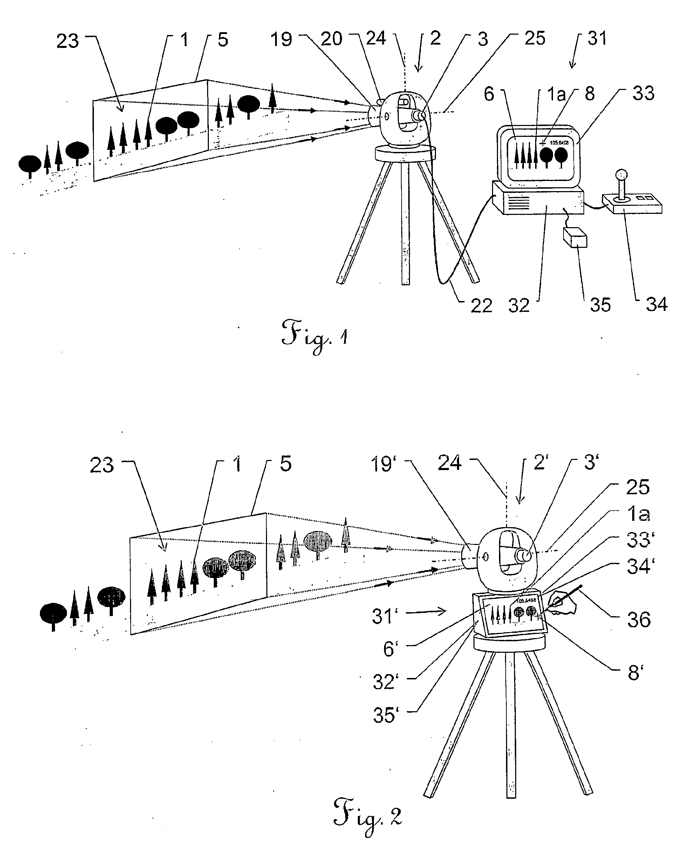

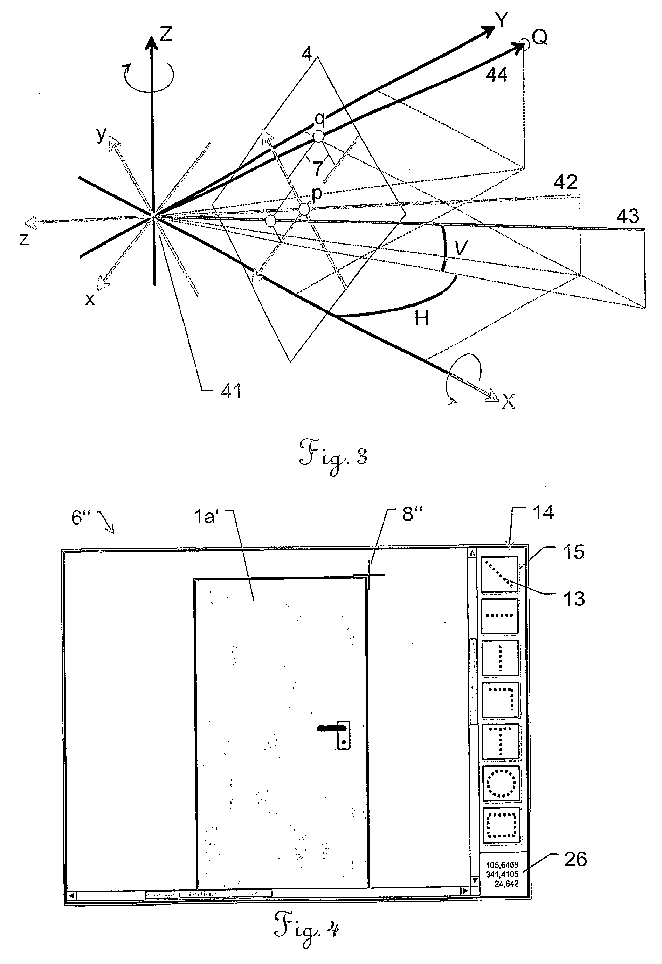

Fig. 1 zeigt die figürliche Darstellung eines geodätischen Messgeräts 2 mit elektronischen Aufnahmemitteln 3 zur Erfassung eines Aufnahmebildes zumindest eines geodätisch zu vermessenden Objekts 1 und mit einer elektronischen Anzeige- und Steuervorrichtung 31. Das geodätische Messgerät 2 weist eine um eine Stehachse 24 drehbare und eine Kippachse 25 schwenkbare Optikeinheit 19 mit Aufnahmemitteln 3, hier als eine anstelle eines Okulars angeordnete CCD oder CMOS Kamera ausgebildet, auf. Das geodätische Messgerät 2 besitzt ausserdem einen externen Entfernungsmesser 20 zur reflektorlosen Distanzmessung und/oder zur Fokussierung der Optikeinheit 19. Alternativ ist es möglich, den Entfernungsmesser 20 in die Optikeinheit 19 zu integrieren und/oder von der Ausrichtung der Optikeinheit 19 bezüglich seines Erfassungsbereichs zu entkoppeln. Im Fall eines integrierten Entfernungsmessers handelt es sich bei dem geodätischen Messgerät 2 um einen sogenannten Tachymeter. Die Aufnahmemittel 3 erfassen innerhalb eines gewissen Erfassungsstreifens 5, der insbesondere durch die Kenndaten der Optikeinheit 19 bestimmt wird, eine mindestens ein geodätisch zu vermessendes Objekt 1 aufweisende Szene 23, die in Fig. 1 durch die sechs Bäume symbolisiert wird. Der Erfassungsstreifen 5 ist durch Drehen oder Kippen der Optikeinheit 19 einschliesslich der Aufnahmemittel 3 um die Stehachse 24 und die Kippachse 25 ausrichtbar und gegebenenfalls durch Veränderung des Abbildungsmassstabs der Optikeinheit 19 in seiner Grösse variierbar. Die Ausrichtung des Erfassungsstreifens 5 ergibt sich somit aus der Ausrichtung der Optikeinheit 19 und wird über Winkel-Encoder (nicht dargestellt), die in dem geodätischen Messgerät 2 integriert sind, ermittelt. Die Szene 23 innerhalb des Erfassungsstreifens 5, insbesondere das geodätisch zu vermessende Objekt 1, das hier als ein Baum dargestellt ist, wird von der Optikeinheit 19 auf die Aufnahmemittel 3, die beispielsweise einen Bildsensor aufweisen, abgebildet und erzeugt dort eine Abbildung der innerhalb des Erfassungsstreifens 5 erfassten Szene 23 in Form eines Aufnahmebildes 4 (in Fig. 1 und Fig. 2 nicht dargestellt, siehe Fig. 3). Das Aufnahmebild 4 wird mittels eines Signals über eine Drahtverbindung 22 an die elektronische Anzeige und Steuervorrichtung 31 weitergeleitet. Alternativ ist eine Funkverbindung oder eine Übertragung über Kommunikationsnetzwerke wie beispielsweise das Internet realisierbar. Diese elektronische Anzeige und Steuervorrichtung 31 umfasst elektronische Berechnungsmittel 32, elektronische Darstellungsmittel 33, Eingabemittel 34 und einen Template-Speicher 35. Das Aufnahmebild 4, ein Ausschnitt, eine Vergrösserung oder eine Verkleinerung des Aufnahmebildes 4 wird durch die Darstellungsmittel 33 visuell in Form eines Darstellungsbildes 6 dargestellt, welches zumindest das aufgenommene, geodätisch zu vermessende Objekt 1a, hier den einen Baum, beinhaltet. Eine Koordinate auf dem Darstellungsbild 6, im Folgenden als Darstellungsbild-Koordinate 8 bezeichnet, ist über die Eingabemittel 34 festlegbar, beispielsweise durch Positionieren eines mittels eines Joysticks oder einer Maus bewegbaren Cursors. Weiters ist es möglich, über die Eingabemittel 34 Daten, wie beispielsweise Koordinaten, Zoomeinstellungen, Ausrichtungseinstellungen des geodätischen Messgeräts 2 und weitere Daten und Kommandos, insbesondere zur Selektion von Auswahlhilfen in Form von Templates, in die Berechnungsmittel 32 einzugeben. So ist es beispielsweise realisierbar, einen das abgebildete Objekt 1a enthaltenden Ausschnitt des Darstellungsbildes 6 stark zu vergrössern und eine Darstellungsbild-Koordinate einzugeben, indem ein Cursor genau auf einem Bildpunkt des abgebildeten Objekts 1a positioniert wird. Die Berechnungsmittel 32 führen ein Programm gemäss einer Software und/oder Firmware aus und werden beispielsweise durch eine CPU gebildet. Der Template-Speicher 35 dient zur Speicherung mindestens eines Templates, beispielsweise in Form einer graphischen Vorlage, wobei das Template das geodätisch zu vermessende Objekt zumindest teilweise modelliert. Die Funktion des Template-Speichers 35 wird weiter unten genauer beschrieben. Zur konkreten Realisierung des beschriebenen geodätischen Messgeräts 2 ist es möglich, für die Aufnahme des Aufnahmebildes einen modifizierten Leica Tachymeter TCXA110x zu verwenden. Das Okular wird durch eine CCD-Kamera als Aufnahmemittel 3 ersetzt, wobei für eine Serieproduktion ein geeigneter bildgebender Sensor verwendet wird. Durch den Einbau eines Motors in das Fernrohr, welches die Optikeinheit 19 bildet, wird eine automatische Fokussierung ermöglicht. Die Fokussierung kann sowohl auf die gesamte Szene 23 als auch auf definierte Ausschnitte angewendet werden. In einem möglichen System kann auch eine Fokussierung auf bestimmte Objekte realisiert werden. Alternativ oder bei einfachen Systemen kann der Benutzer auch von Hand fokussieren.

Fig. 2 zeigt eine mögliche, alternative Ausgestaltung des Systems aus Fig. 1, in welchem ein geodätisches Messgerät 2' und eine elektronische Anzeige- und Steuervorrichtung 31' als eine gemeinsame integrierte Einheit ausgebildet sind. Wie in Fig. 1 weist das geodätische Messgerät 2' eine um eine Stehachse 24 und eine Kippachse 25 ausrichtbare Optikeinheit 19' mit Aufnahmemitteln 3' zur Erfassung einer Szene 23 mit einem geodätisch zu vermessenen Objekt 1 innerhalb eines Erfassungsstreifens 5 auf. Die Anzeige- und Steuervorrichtung 31' ist hingegen direkt am oder innerhalb desselben Gehäuses des geodätischen Messgeräts 2' angeordnet und beinhaltet die Berechnungsmittel 32', die Darstellungsmittel 33', die Eingabemittel 34' und den Template-Speicher 35' in einer einzigen Vorrichtung. Die Darstellungsmittel 33', die zumindest einen Teil der Szene innerhalb des Erfassungsstreifens 5 in Form zumindest des abgebildeten Objekts 1a wiedergeben, sind in dieser Ausführungsform als ein berührungssensitiver TFT/LCD-Bildschirm ausgebildet und stellen somit auch die Eingabemittel 34' dar, durch welche über Berühren des Bildschirms entweder von Hand oder mittels eines Stiftes 36 direkt eine Darstellungsbild-Koordinate 8' im Darstellungsbild 6' festlegbar ist.

Fig. 3 zeigt das Transformationsmodell zur Transformation einer Aufnahmebild-Koordinate des Aufnahmebildes 4 in Polarwinkel eines erfassten Objekts 1 mit einem Objektpunkt Q. Damit die Polarwinkel eines beliebigen Objektpunktes Q innerhalb des Erfassungsstreifens 5 anhand seiner Position auf dem Aufnahmebild 4, das von dem Bildsensor der Aufnahmemittel 3 erfasst wird, und somit anhand seiner Aufnahmebild-Koordinate bestimmt werden können, muss eine mathematische Beschreibung der Abbildung der Szene 23 auf das Aufnahmebild 4 bekannt sein. Im Folgenden soll die Transformation von Punkten im Aufnahmebild-Koordinatensystem x, y, z in das Objektkoordinatensystem X, Y, Z anhand der Fig. 3 beschrieben werden. Die Achse Z weist in Richtung des Zenits und stellt die Stechachse 24 dar, die Achse X wird von der Kippachse 25 gebildet.

Für eine vereinfachte Transformation mit beschränkter Genauigkeit können folgende Annahmen gemacht werden, wobei von einem geodätischen Messgerät, das bezüglich seiner Achssysteme und seines prinzipiellen Aufbaus einem Theodoliten entspricht, ausgegangen wird:

- Das Projektionszentrum 41 der Abbildung der innerhalb des Erfassungsstreifens 5 erfassten Objekte auf die Aufnahmemittel 3 liegt im Schnittpunkt von Stehachse 24 und Kippachse 25.
- Die Kippachse 25 ist senkrecht zur Stehachse 24.
- Die optische Achse 42 und die Theodolitenachse 43 schneiden sich im Projektionszentrum 41.

Hierbei ist die optische Achse 42 definiert als die Achse durch die Optikeinheit 19 und somit im Wesentlichen diejenige Achse, welche durch die Zentren der Linsen geht. Die Theodolitenachse 43 ist definiert als diejenige Achse, bezüglich welcher die Verdrehwinkel um die Stehachse 24 und die Kippachse 25 gemessen werden. Das bedeutet, dass der Schnittpunkt der Theodolitenachse 43 mit dem Bildsensor der Aufnahmemittel 3 bei einer Zweilagenmessung exakt auf den zu vermessenden Objektpunkt Q des Objekts 1 zeigt. Dies entspricht der Zielachse bezüglich dem Fadenkreuz bei optischen Theodoliten.

Es ist jedoch auch möglich, nicht von diesen Annahmen auszugehen, sondern die Transformation entsprechend zu erweitern, wobei beispielsweise Achsfehler - insbesondere ein Achsversatz oder eine Achsschiefe - in die Transformation mit einbezogen werden. Dies sorgt für eine weitere Erhöhung der Genauigkeit der Transformation und biete sich daher besonders bei geodätischen Messgeräten höchster Präzisionsklasse an.

Die Berechnungen beschränken sich auf die Abbildung eines Objektpunktes Q in einem übergeordneten Koordinatensystem, welches horizontal ist und dessen Ursprung im Projektionszentrum 41 liegt, in die Bildebene des Aufnahmebildes 4. Eine Überführung in ein beliebiges Koordinatensystem kann mittels Verschiebung und Rotation über die bekannte Helmerttransformation mit Massstab gleich eins durchgeführt werden.

Das Transformationsmodell zur Transformation einer Aufnahmebild-Koordinate in eine Objekt-Koordinate lautet wie folgt:

$$r_q = r_P + T_0 \cdot \left( \frac{1}{m} \cdot T_{Hz,V} \cdot R_{Inc} \cdot r_Q \right)$$

mit

$r_Q$.    Objektvektor 44 des Punktes Q im System (X, Y, Z),

$r_q$    Vektor des Punkte q, des Bildes des Objektpunkts Q auf dem Aufnahmebild 4, gemessen im Aufnahmebild-Koordinatensystem x, y, z. Die x-und y-Komponenten wird durch die Aufnahmebild-Koordinate 7 bestimmt. Die z-Komponente entspricht der Kammerkonstante c, die definiert ist als der Abstand des Bildsensors der Aufnahmemittel 3 und somit des Aufnahmebildes 4 vom Projektionszentrum 41 und somit der Eintrittspupille. Die Kammerkonstante ändert sich mit der Stellung einer Fokuslinse der Optikeinheit 19 und ist deshalb an den Massstab gekoppelt:

Kammerkonstante c = Abbildungsmassstab m * (Abstand Objekt von der Eintrittspupille).

$r_P$    Hauptpunktvektor, welcher den Schnittpunkt p von der optischen Achse 42 mit dem Aufnahmebild 4 beschreibt.

$m$    Abbildungsmassstab.

$R_{Inc}$    Rotationsmatrix, die die verkippte Theodolitebene in eine Horizontalebene überführt.

$T_{Hz,V}$    Transformationsmatrix welche die Orientierung der Theodolitenachse 43 basierend auf dem Horizontalwinkel H, dem Vertikalwinkeln V und den Korrekturen der Achsenfehler beschreibt.

$T_0$    Matrix zur Modellierung der optischen Verzerrungen.

Fig 3. skizziert die obige Transformation des Objektpunktes $r_Q$ vom übergeordneten Koordinatensystem X, Y, Z in das Bildkoordinatensystem x, y, z. Mittels der gemessenen Neigungswinkel, des Horizontalwinkels H, des Vertikalwinkels V und der Achsenkorrekturen ist es möglich, den Objektpunktvektor $r_Q$ in das System der Abbildungsmittel 3 abzubilden. Die Abweichung der optischen Achse 42 von der Theodolitenachse 43 und die optischen Verzerrungen werden mittels geeigneter Transformationen und Kalibrierungen korrigiert.

Es eignen sich hier Ansätze aus der Photogrammetrie, wie zum Beispiel die aus dem Stand der Technik bekannte Modellierung nach Brown (1971) oder Bayer (1992). Bei schmalwinkligen Systemen kann die Korrektur durch eine einfache Affintransformation modelliert werden.

Zu Vermeidung von Messfehlern müssen im Wesentlichen drei Kalibrierungen durchgeführt werden, die in die obige Transformation in Form einer Matrix mit eingebunden werden können:

- Temperatur,
- Fokussierung / Abbildungsmassstab, und
- Pixel Ablage in Winkelkorrekturen (beinhaltet auch die Theodolit-Achsen-Korrektur).

Im Folgenden wird die Temperaturkalibrierung beschrieben.

Die Temperaturkalibrierung des gesamten Systems wird analog der Kalibrierung eines optischen Theodoliten durchgeführt. Der Vorteil eines bildunterstützten Systems liegt darin, dass das Objekt nicht mehr manuell in beiden Lagen angezielt werden muss, sondern dass das System mittels Bildanalyse die Polarwinkel des Objekts bestimmt. Um Einflüsse durch optische Verzerrungen auszuschliessen, kann das geodätische Messgerät sehr genau, im Bereich von wenigen cc, auf das Objekt ausgerichtet werden. Die Ablage zwischen einem die Zielachse definierenden Fadenkreuz und einem Objektpunkt auf dem Bildsensor der Aufnahmemittel 3 wird mittels des oben genannten Modells bestimmt. Unsicherheiten in den Modellparametern können vernachlässigt werden, da die Ablagen sehr klein sind.

Für die Umrechung der Pixelablagen auf dem Aufnahmebild 4 in Polarwinkel des geodätisch zu vermessenden Objekts 1 ist es nötig, die oben definierte Kammerkonstante des Systems aus Optikeinheit 19 und Aufnahmemittel 3 zu kennen. Dazu wird die jeweils beste Fokusposition der Optikeinheit 19 für ein Ziel innerhalb des Erfassungsstreifens 5 bei unterschiedlichen Distanzen bestimmt. Basierend auf einem mathematischen Modell des optischen Designs werden Parameter ermittelt, die es ermöglichen, aus einer beliebigen Fokusposition die Kammerkonstante abzuleiten.

Ein Online-Verfahren ermöglicht es, den Abbildungsmassstab der optischen Abbildung, welcher direkt mit der Kammerkonstante gekoppelt ist, während einer Messung zu bestimmen. Aufgrund der Verschiebung eines Objektpunktes innerhalb des Erfassungsstreifens 5 auf dem Bildsensor der Aufnahmemittel 3 als Folge einer Bewegung der Optikeinheit 19 und der Aufnahmemittel 3 kann der Abbildungsmassstab bestimmt werden. Das Verfahren basiert auf einer sehr genauen Bestimmung des Objekts in zwei oder mehreren Bildern für unterschiedliche Positionen des geodätischen Messgeräts 2. Die Objektbestimmung wird mittels Bildmatching-Verfahren durchgeführt.

Um die Polarwinkel von Objekten zu bestimmen, die nicht auf der Zielachse sondern auf einem beliebigen Punkt innerhalb des Erfassungsstreifens 5 liegen, muss eine exakte Umrechnung von Pixelablagen, definiert durch die Aufnahmebild-Koordinate 7, in Winkelkorrekturen erfolgen.

Es wird folgender Messprozess verwendet. Ein ruhendes Objekt wird mit dem geodätischen Messgerät 2 abgescannt. Das geodätische Messgerät 2 wird so positioniert, dass sich das Objekt über den Bildsensor der Aufnahmemittel 3 bewegt. Die Aufnahmen werden in beiden Lagen der Optikeinheit, vergleichbar beider Theodolitenfernrohrlagen, durchgeführt. Die Positionen des Objekts auf dem Bildsensor der Aufnahmemittel 3 werden über Image Analysis bestimmt. Eine geeignete Methode stellt das Template Matching Verfahren dar. Aus den mittels des geodätischen Messgeräts 2 gemessenen Horizontal- und Vertikalwinkeln und den entsprechenden Objektpositionen auf dem Bildsensor der Aufnahmemittel 3 werden die Transformations-Parameter ermittelt. Um die Zuverlässigkeit der Parameter zu erhöhen, können mehrere Objekte verwendet werden.

Die Achsfehler (Höhenindexfehler, Kollimationsfehler und Kippachsfehler) werden bei dieser Kalibrierung bezüglich der optischen Achse direkt mitbestimmt.

Das Messverfahren wird durch Bildverarbeitung weitgehend automatisiert, so dass der Benutzer jedes Ziel nur jeweils in der ersten Lage anzielen muss. Das System lernt in diesem Schritt die Ziele und vermisst sie dann automatisch in beiden Lagen.

Im Folgenden wird das Messprinzip beschrieben.

Die semi-automatisierte Vermessung basiert auf einer stetigen Interaktion zwischen Benutzer und Gerät. Das bedeutet, dass der Benutzer definiert, was gemessen werden soll und das Messsystem führt die eigentliche Messung durch, ohne dass dabei zwangsläufig mechanische Teile bewegt werden. Der Messprozess ist hierarchisch aufgebaut. Als erstes selektiert der Benutzer ein Template in Form einer Vorlage aus einem Menu, welches Template das zu vermessende Objekt in seiner Form beschreibt. Er hat nun die Möglichkeit das Template näherungsweise auf dem abgebildeten Objekt zu platzieren oder aus automatisch gefundenen Objekten auszuwählen. Über die Auswahl der Vorlage kann sowohl die globale als auch die lokale Struktur des Ziels definiert werden. Das Messsystem führt ein lokales Matching im Bereich von wenigen Pixeln durch, um damit die Position und die Richtung eines Objektpunktes im Bild zu bestimmen. Nachdem genügend viele solcher lokaler Punkte bestimmt wurden, wird ein globales Matching durchgeführt, welches das Ziel in seiner Gesamtheit definiert. Damit sind die Richtungswinkel bestimmt. Um gegebenenfalls die dritte Dimension zu erhalten, wird der reflektorlose Distanzmesser 20 verwendet. Der Benutzer kann die Positionierung eines Lasers des Distanzmessers 20 manuell oder über die Bildauswertung automatisch definieren. Dies soll an einem Beispiel durch die Fig. 4 bis Fig. 8 verdeutlicht werden. Ziel dieser exemplarischen Messung soll es sein, einen Türrahmen bzw. eine Ecke des Türrahmens zu bestimmen.

Fig. 4 zeigt ein auf den Darstellungsmitteln 33 dargestelltes Darstellungsbild 6" mit einem aufgenommenen, zu vermessenden Objekt 1a' in Form einer Türe. Das Darstellungsbild 6" zeigt ausserdem ein Auswahlmenü 14, das dem Benutzer mehrere auswählbare Menüpunkte 15 zur Verfügung stellt, welche Auswahl-Templates 13 in Form von unterschiedlichen Vorlagen graphisch darstellen.

In einer ersten möglichen Variante legt der Benutzer durch Platzierten eines Cursors eine Darstellungsbild-Koordinate 8" in der zu vermessenden Ecke der Türe 1a' fest, indem er den die Darstellungsbild-Koordinate 8" beschreibenden Cursor pixelweise auf den Darstellungsmitteln 33 mittels der Eingabemittel 34 verschiebt. Die Berechnungsmittel 32 bestimmen aus der somit festgelegten Darstellungsbild-Koordinate 8" direkt eine Aufnahmebild-Koordinate 7, die sich aus dem Bildausschnitt des Darstellungsbildes 6" im Verhältnis zu dem Aufnahmebild 4, insbesondere aus der Vergrösserungsansicht und dem Ausschnitt, ergibt. Basierend auf dem oben beschriebenen Transformationsmodell wird diese Aufnahmebild-Koordinate 7 in einen Polarwinkel, insbesondere unter Berücksichtigung der Winkelausrichtung des Erfassungsstreifens 5 der Aufnahmemittel 3, der Temperatur und der optischen Fehler transformiert und das Ergebnis der Transformation in Form eines Anzeigefensters 26 auf dem Darstellungsbild 6" wiedergegeben. Ausserdem erfolgt eine Distanzmessung, indem der Distanzmesser 20 die Entfernung zu dem Objektpunkt mit dem ermittelten Polarwinkel misst. Das Ergebnis dieser Distanzmessung wird ebenfalls im Anzeigefester 26 angezeigt.

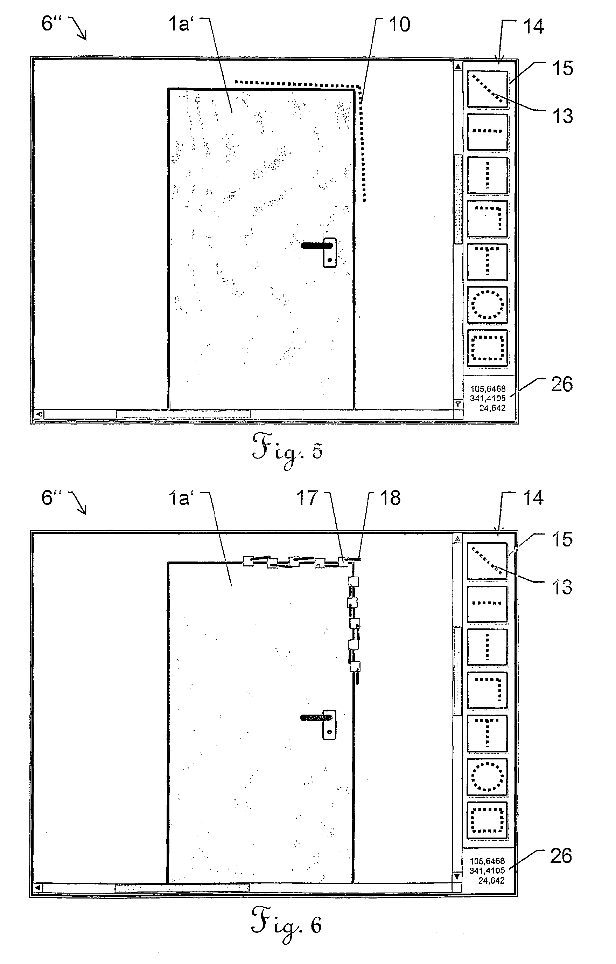

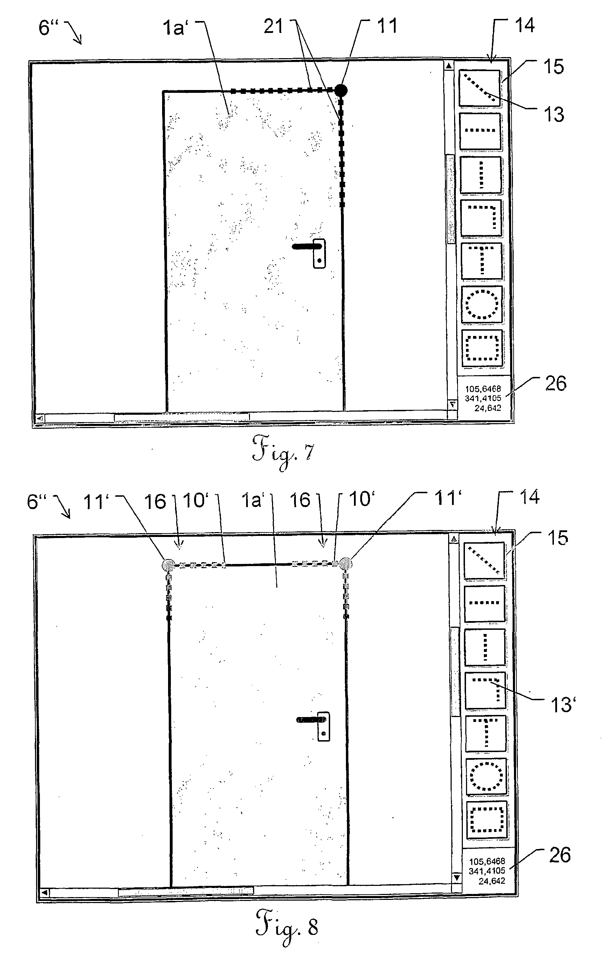

In einer zweiten möglichen Variante, die mittels der Fig. 5 veranschaulicht wird, erfolgt die Bestimmung des zu vermessenden Objektpunktes unter Zuhilfenahme mindestens eines Templates 10, das das zu vermessende aufgenommenen Objekt 1a' zumindest teilweise modelliert - hier die rechte obere Ecke der Türe. Der Benutzer wählt hierzu aus den Menüpunkten 15 des Auswahlmenüs 14 ein geeignetes Auswahl-Template 13 aus, in diesem Fall eine Polylinie. Er platziert nun das ausgewählte Template 10 durch Festlegen mehrerer Darstellungsbild-Koordinaten mittels der Eingabemittel 34, beispielsweise unter Zuhilfenahme eines Cursors, grob auf dem zu vermessenden Objekt 1a', also auf die rechte obere Ecke der Türe, wie in Fig. 5 dargestellt. Das Template 10 wird verwendet, um das Objekt im Bild mit Subpixelgenauigkeit zu bestimmen. Dazu wird mittels der Berechnungsmittel 32 zuerst ein lokales Matching durchgeführt. Die Matching-Punkte sind in Fig. 6 durch Abgleichpunkte 17 gekennzeichnet, die Richtung der Kante durch Richtungsvektoren 18. Basierend auf den lokalen Matching-Punkten werden nun, wie in Fig. 7 dargestellt, Geraden 21 gefittet. Der Schnittpunkt der Geraden 21 stellt einen charakteristischen Punkt 11 des Templates 10 dar, der nun mit Subpixelgenauigkeit einer Aufnahmebild-Koordinate 7 und nach dem oben beschriebenen Verfahren einer Polarkoordinate des zu vermessendes Objekts, hier der rechten oberen Ecke der Türe, gegebenenfalls einschliesslich der Entfernung, zugeordnet wird.

In einer dritten, in Fig. 8 veranschaulichten möglichen Variante wählt der Benutzer ein Template, das das zu vermessende Objekt zumindest teilweise modelliert, durch Auswählen eines Auswahl-Templates aus, woraufhin die Berechnungsmittel 32 nach Strukturen im aufgenommenen Bild suchen, die dem Template 10' ähnlich sind. In Fig. 8 selektiert der Benutzer als Template 10' ein Eck-Auswahl-Template 13', woraufhin die Berechnungsmittel 32 automatisch über Matching nach Eck-Strukturen im aufgenommenen Objekt 1a' suchen. In diesem Fall gibt es zwei Strukturen 16, die dem Eck-Auswahl-Template 13' ähnlich sind, nämlich die linke und die rechte Ecke der oberen Türe. Das Template 10' wird automatisch auf diese von den Berechnungsmitteln gefundenen Strukturen 16 platziert. Die charakteristischen Punkte 11' sind in diesem Fall jeweils der Eckpunkt des Templates 10'. Nach der Auswahl eines dieser charakteristischen Punkte 11' durch den Benutzer erfolgt, wie oben beschrieben, nach Bestimmung der entsprechenden Aufnahmebild-Koordinate 7 die Bestimmung der Polarwinkel und gegebenenfalls der Distanz des Objektpunktes.

Abhängig vom Template 10, 10' ist es auch möglich, dass pro Template 10, 10' mehrere charakteristische Punkte 11, 11' zur Verfügung gestellt werden, beispielsweise Endpunkte, Eckpunkte, Mittelpunkte und Schnittpunkte.

Dem Benutzer steht, wie oben gezeigt, eine bestimmte Palette an Auswahl-Templates 13, 13' zur Verfügung. Diese unterschiedlichen Auswahl-Templates 13, 13' werden in einem Template-Speicher 35 gespeichert. Dabei stehen dem Benutzer insbesondere drei Möglichkeiten zur Erzeugung des Templates zur Verfügung. Erstens besteht die Möglichkeit der Verwendung eines Ausschnittes eines real aufgenommenen Bildes als Template 10, 10' Zweitens kann ein künstlich erzeugtes Pixelbild eines Objekts als Template 10, 10' verwendet werden, wobei eine Verschiebung des Templates 10, 10' im Subpixelbereich durch Interpolation bestimmt wird. Die dritte Möglichkeit besteht in der mathematischen Beschreibung des Objekts, aus welcher das Template 10, 10' für jede beliebige Bildposition berechnet werden kann. Die Speicherung eines mittels dieser Methoden erzeugten Templates 10, 10' im Template-Speicher 35, der als ein bekannter Datenspeicher ausbildbar ist, erfolgt entweder als Pixelbild, wobei dieses durch geeignete Kompressionsverfahren im Umfang reduziert werden kann, oder als mathematische Beschreibung, wobei das Template 10, 10' über einen geeigneten Algorithmus online berechnet und nicht permanent gespeichert wird.

Das beschriebene Verfahren ist als Programm speicherbar, insbesondere in Form eines Computerprogrammprodukts, das als Software, beispielsweise auf einer Diskette, CD oder Festplatte, von den Berechnungsmittels 32 les- und ausführbar ist. Ausserdem ist es möglich, das Programm als Firmware, beispielsweise auf einem EPROM, einem elektronisch programmierbaren Festwertspeicher, der Berechnungsmittel 32 zu speichern.

Die Vorteile des erfindungsgemässen Systems und Verfahrens bestehen insbesondere darin, dass der Mensch in den Messprozess eingebunden wird und das System direkt steuern kann, wodurch eine ideale Verknüpfung von der Steuerung durch den Benutzer und der Zuverlässigkeit von Algorithmen erreicht wird. Das System vermisst nur die relevanten Punkte, die nötig sind zur Bestimmung des Objekts. Verglichen mit einem Scanner, welcher alle Punkte abscannt, wird eine intelligente Vermessung durchgeführt, was auch zu einer signifikanten Reduktion von Daten führt. Andererseits werden lokal begrenzt möglichst viele Bildpunkte verwendet. Damit wird eine Redundanz in der Beschreibung des Objekts erreicht. Das System ist ausserdem multifunktional, indem sowohl 3D Punkte als auch dreidimensionale Objekte wie Geraden über Bildauswertung vermessen werden können. Ferner ist es möglich, Bilddaten zu Dokumentationszwecken abzuspeichern. Es besteht weiter die Möglichkeit, zu einem späteren Zeitpunkt die Bilder zu verwenden, um die Horizontal- und Vertikalwinkel weiterer Punkte zu bestimmen. Die 3D Bestimmung wird möglich, wenn die Ebene, in welcher die Punkte liegen, bekannt ist.

Die Erfindung eignet sich zur Verwendung in den unterschiedlichsten Anwendungsbereichen. Beispielsweise kann die Überwachung bestimmter Objekte mit dem erfindungsgemässen System weitgehend automatisiert werden, ohne dass Zielmarken oder Prismen im zu überwachenden Bereich angebracht werden müssen. Der Benutzer zielt das zu überwachende Objekt grob an, so dass es auf dem Bild sichtbar ist. Dazu kann ein Diopter oder ein Laserpointer verwendet werden. Danach wird fokussiert, was manuell oder automatisch durchgeführt werden kann. In einem nächsten Schritt wird das Objekt als Template gespeichert. Über geeignete Matching-Verfahren kann nun das Ziel immer wieder vermessen werden, ohne dass der Benutzer eingreifen muss. Sobald eine Abweichung über einer zuvor festgelegten Schwelle festgestellt wird, wird ein Alarm ausgelöst. Der Vorteil gegenüber bekannten Methoden ist die weitgehende Automatisierung ohne Verwendung von künstlichen Zielmarken.

Die Vermessung von Gebäuden wird heute weitgehend manuell durchgeführt, da es nicht möglich ist, an allen zu vermessenden Punkten ein Prisma anzubringen. Mit dem erfindungsgemässen System kann durch Interaktion mit dem Benutzer die Vermessung teilautomatisiert werden. Der Benutzer zielt mit dem geodätischen Messinstrument im Weitwinkelmodus auf das Objekt und bezeichnet alle zu vermessenden Punkte im Bild. Die Identifikation kann über das Plazieren von Templates erfolgen. Für die Punkte können Parameter spezifiziert werden, dass zum Beispiel einige Punkte in einer Ebene oder auf einer Gerade liegen. Mit dieser Zusatzinformation ist es möglich, den Messvorgang zu beschleunigen. Zusätzlich zu den 3D Informationen werden dann auch mögliche Abweichungen von der Idealposition angegeben.

Für die Stationierung eines geodätischen Messgeräts werden mehrmals dieselben Fixpunkte verwendet. Mit dem oben beschriebenen System ist es nun möglich, diese Fixpunkte mittels Bildanalyseverfahren zu bestimmen. Damit entfällt das mühsame manuelle Anzielen dieser Punkte. Wenn die Fixpunkte mehrmals von derselben Stelle aus verwendet werden, kann das System diese auch als Templates speichern und bei der nächsten Stationierung wieder verwenden, was den Messprozess zusätzlich beschleunigt.

Mit dem Bildunterstützen System ist weiters eine Zielverfolgung von nicht kooperativen Objekten realisierbar. Dazu wird wieder die Objektstruktur gespeichert und dann iterativ im Bild identifiziert und die Position bestimmt.

**Patentansprüche**

1. Verfahren zur geodätischen Vermessung eines Objekts (1), unter Verwendung eines geodätischen Messgeräts, (2, 2') mit elektronischen Aufnahmemitteln (3, 3') zur Erfassung eines Aufnahmebildes (4) zumindest des geodätisch zu vermessenden Objekts (1),
   mit den Schritten

   • Ermitteln der Winkelausrichtung eines Erfassungsstreifens (5) der Aufnahmemittel (3, 3'),
   • Erfassen des Aufnahmebildes (4),
   • visuelles Darstellen zumindest eines Teilbereichs des Aufnahmebildes (4) in Form eines Darstellungsbildes (6, 6', 6"),
   • Bestimmen einer Aufnahmebild-Koordinate (7) durch Festlegen mindestens einer zugeordneten Darstellungsbild-Koordinate (8, 8', 8"), und
   • Transformieren der Aufnahmebild-Koordinate (7) in mindestens eine geodätische Messgrösse - insbesondere einen Raumwinkel oder einen Polarwinkel,

   wobei das Bestimmen der Aufnahmebild-Koordinate (7) durch Festlegen der mindestens einen Darstellungsbild-Koordinate (8, 8') folgende Teilschritte umfasst:

   • Aufrufen mindestens eines Templates (10, 10'), welches das geodätisch zu vermessende Objekt (1) zumindest teilweise modelliert,
   • Positionieren des mindestens einen Templates (10, 10') auf dem Darstellungsbild (6, 6', 6"), insbesondere durch Festlegen mindestens einer Darstellungsbild-Koordinate (8, 8', 8"),
   • Anpassen des mindestens einen Templates (10, 10') an das aufgenommene Objekt (1a, 1a'), und

   Bestimmen der Aufnahmebild-Koordinate (7) mittels mindestens eines charakteristischen Punktes (11, 11') des mindestens einen Templates (10, 10'),
   **dadurch gekennzeichnet, dass**
   das Anpassen des mindestens einen Templates (10, 10') an das aufgenommene Objekt (1a, 1a') mittels Matching erfolgt und folgende Teilschritte umfasst:

   • lokales Matching des Templates (10, 10') mit dem aufgenommenen Objekt (1a, 1a') - insbesondere durch Erzeugen von Abgleichpunkten (17) mit Richtungsvektoren (18), und

• globales Matching unter Verwendung der Resultate des lokalen Matchings - insbesondere basierend auf den Abgleichpunkten (17) mit den Richtungsvektoren (18).

2. Verfahren nach Anspruch 1, wobei das Bestimmen der Aufnahmebild-Koordinate (7) durch Festlegen der mindestens einen Darstellungsbild-Koordinate (8, 8', 8") folgende Teilschritte umfasst:

   • Festlegen der Darstellungsbild-Koordinate (8, 8', 8"), vorzugsweise in diskreten Schritten, insbesondere pixelweise, und
   • Zuordnen der Darstellungsbild-Koordinate (8, 8', 8") zu der entsprechenden Aufnahmebild-Koordinate (7).

3. Verfahren nach Anspruch 1 oder 2, wobei das mindestens eine Template (10, 10') als ein Ausschnitt des Aufnahmebildes (4) oder eines vorhergegangenen Aufnahmebildes ausgebildet ist.

4. Verfahren nach Anspruch 1 oder 2, wobei das mindestens eine Template (10, 10') als ein künstlich erzeugtes Pixelbild ausgebildet ist und - insbesondere - eine Verschiebung des Templates (10, 10") auf dem Darstellungsbild (6, 6', 6") im Subpixelbereich durch Interpolation bestimmt wird.

5. Verfahren nach Anspruch 1 oder 2, wobei das mindestens eine Template (10, 10') als eine mathematische Beschreibung eines Objekts ausgebildet ist und - insbesondere - das auf dem Darstellungsbild dargestellte Template (10, 10') über einen Algorithmus berechnet wird.

6. Verfahren nach Anspruch 4 oder 5, wobei das mindestens eine Template (10, 10') durch eine geometrische Grundform beispielsweise eine Linie, eine Polylinie, ein Punkt, ein Kreis oder ein Rechteck - gebildet wird.

7. Verfahren nach einem der Ansprüche 1 bis 6, wobei das Aufrufen des mindestens einen Templates (10, 10') menügesteuert aus einer Auswahl vordefinierter und/oder vordefinierbarer Auswahl-Templates (13, 13') erfolgt.

8. Verfahren nach Anspruch 7, wobei das menügesteuerte Aufrufen mittels eines Auswahlmenüs (14) mit mehreren, die Auswahl-Templates (13, 13') zumindest teilweise graphisch darstellenden Menüpunkten (15) erfolgt.

9. Verfahren nach einem der Ansprüche 1 bis 8, wobei das Positionieren des mindestens einen Templates (10, 10') auf dem Darstellungsbild (6, 6', 6") durch Verschieben des Templates (10, 10') auf dem Darstellungsbild (6, 6', 6') erfolgt.

10. Verfahren nach einem der Ansprüche 1 bis 8, wobei das Positionieren des Templates (10, 10') auf dem Darstellungsbild (6, 6', 6") zumindest teilweise automatisch erfolgt, mit den Teilschritten:

   • Suchen mindestens einer dem Template (10, 10') ähnlichen Struktur (16) auf dem aufgenommenen Objekt (1a, 1a'),
   • Positionieren des Templates (10, 10') auf mindestens einer gefundenen Struktur (16).

11. Verfahren nach Anspruch 10, wobei das Positionieren des Templates (10, 10') auf mindestens einer gefundenen Struktur (16) durch Auswahl mindestens einer angebotenen, gefundenen Struktur erfolgt.

12. Verfahren nach einem der Ansprüche 1 bis 11, wobei mehrere Templates (10, 10') nacheinander auf dem Darstellungsbild (6, 6', 6") positioniert und gegebenenfalls miteinander verbunden werden.

13. Verfahren nach einem der Ansprüche 1 bis 12, wobei das Bestimmen der Aufnahmebild-Koordinate (7) mittels mindestens eines charakteristischen Punktes (11, 11') des mindestens einen Templates (10, 10') folgende Teilschritte umfasst:

   • Ermitteln mindestens eines charakteristischen Punktes (11, 11') des mindestens einen Templates (10, 10'), insbesondere einen Schnittpunkt, einen Mittelpunkt, einen Endpunkt oder ein Zentrum,
   • Auswählen eines charakteristischen Punktes (11, 11'), und
   • Zuordnen des charakteristischen Punktes (11, 11') zu einer Aufnahmebild-Koordinate (7),

14. Verfahren nach einem der Ansprüche 1 bis 13, wobei das Transformieren der Aufnahmebild-Koordinate (7) in mindestens eine geodätische Messgrösse wenigstens unter Einbeziehung der Aufnahmebild-Koordinate (7) und der Winkelausrichtung des Erfassungsstreifens (5) der Aufnahmemittel (3, 3') erfolgt.

15. Verfahren nach Anspruch 14, wobei die mindestens eine geodätische Messgrösse von mindestens einem Raumwinkel - insbesondere einem Horizontalwinkel und/oder einem Vertikalwinkel - gebildet wird.

16. Verfahren nach einem der Ansprüche 1 bis 15, wobei das Transformieren den Teilschritt enthält:

   Ausgleichen von optischen Fehlern - insbesondere Verzeichnungsfehlern - des Aufnahmebildes (4).

**17.** Verfahren nach Anspruch 16, wobei das Ausgleichen der optischen Fehler mittels eines für das geodätische Messgerät (2, 2') individuell - insbesondere empirisch - ermittelten Abbildungsfehler-Korrekturgliedes - insbesondere einer Korrekturfunktion oder einer Korrekturtabelle - erfolgt.

**18.** Verfahren nach einem der Ansprüche 1 bis 17, wobei das Transformieren den Teilschritt enthält:

Ausgleichen von temperaturabgängigen Ablagen in der zugeordneten Aufnahmebild-Koordinate (7) und/oder der ermittelten Winkelausrichtung des Erfassungsstreifens (5) der Aufnahmemittel (3, 3') in Abhängigkeit von einer gemessenen Temperatur.

**19.** Verfahren nach Anspruch 18, wobei das Ausgleichen der temperaturabgängigen Ablagen mittels eines für das geodätische Messgerät (2, 2') individuell - insbesondere empirisch - ermittelten Temperatur-Korrekturgliedes - insbesondere einer Korrekturfunktion oder einer Korrekturtabelle - erfolgt.

**20.** Verfahren nach einem der Ansprüche 1 bis 19, wobei das Transformieren unter Einbeziehung der Fokusposition und/oder des Abbildungsmassstabs einer den elektronischen Aufnahmemitteln (3, 3') vorgeschalteten Optikeinheit (19, 19') erfolgt.

**21.** Verfahren nach einem der Ansprüche 1 bis 20, wobei das Verfahren ausserdem den Schritt aufweist:

Bereitstellen der mindestens einen geodätischen Messgrösse, insbesondere des mindestens einen Raumwinkels.

**22.** Verfahren nach Anspruch 21, wobei das Bereitstellen der mindestens einen geodätischen Messgrösse durch visuelles Darstellen, insbesondere durch Einblenden in das Darstellungsbild (6, 6', 6"), beispielsweise über ein Anzeigefenster (26), erfolgt.

**23.** Verfahren nach Anspruch 21 bis 22, wobei das Bereitstellen der mindestens einen geometrischen Messgrösse durch eine Ausgeben mindestens eines Raumwinkels an einen Entfernungsmesser (20) erfolgt, mit den Teilschritten:

• Messen einer Entfernung eines Objektpunktes (Q), der durch den mindestens einen Raumwinkel definiert wird, und
• Bereitstellen der Entfernung des Objektpunktes (Q), insbesondere durch Einblenden in das Darstellungsbild (6, 6', 6"), beispielsweise über ein Anzeigefenster (26).

**24.** Elektronische Anzeige- und Steuervorrichtung (31, 31'), mit

• elektronischen Berechnungsmitteln (32, 32'),
• elektronischen Darstellungsmitteln (33, 33') zum visuellen Darstellen zumindest eines Teilbereichs eines Aufnahmebildes (4) in Form eines Darstellungsbildes (6, 6', 6") und gegebenenfalls zum visuellen Darstellen mindestens einer geodätischen Messgrösse, und
• Eingabemitteln (34, 34') zur Eingabe von Daten - insbesondere zur Eingabe einer Darstellungsbild-Koordinate (8, 8', 8") - in die Berechnungsmittel (32, 32'),

**gekennzeichnet durch** Firmware mit mindestens einem Programm zur Durchführung des Verfahrens nach einem der Ansprüche 1 bis 23.

**25.** Geodätisches Messgerät (2, 2') zur Verwendung in einem Verfahren nach einem der Ansprüche 1 bis 23, mit elektronischen Aufnahmemitteln (3, 3') zur Erfassung eines Aufnahmebildes (4) zumindest eines geodätisch zu vermessenden Objekts (1), **gekennzeichnet durch** eine elektronische Anzeige- und Steuervorrichtung (31, 31') nach Anspruch 24.

**26.** Computerprogrammprodukt mit Programmcode, der auf einem maschinenlesbaren Träger gespeichert ist, zur Durchführung des Verfahrens nach einem der Ansprüche 1 bis 23.

**Claims**

**1.** A method for geodetic surveying of an object (1), using a geodetic measuring instrument (2, 2') comprising electronic recording means (3, 3') for acquiring a recorded image (4) of at least the object (1) to be geodetically surveyed, comprising the steps

• determination of the angle orientation of an acquisition strip (5) of the recording means (3, 3'),
• acquisition of the recorded image (4),
• visual display of at least a part of the recorded image (4) in the form of a display image (6, 6', 6"),
• determination of a recorded image coordinate (7) by establishing at least one associated display image coordinate (8, 8', 8"), and
• transformation of the recorded image coordinate (7) into at least one geodetic parameter - in particular a solid angle or a polar angle,

wherein the determination of the recorded image coordinate (7) by establishing the at least one display image coordinate (8, 8') comprises the following partial steps:

• calling up of at least one template (10, 10') which at least partly models the object (1) to be geodetically surveyed,

• positioning of the at least one template (10, 10') on the display image (6, 6', 6"), in particular by establishing at least one display image coordinate (8, 8', 8"),

• adaptation of the at least one template (10, 10') to the recorded object (1a, 1a') and

• determination of the recorded image coordinate (7) by means of at least one characteristic point (11, 11') of the at least one template (10, 10'),

wherein the adaptation of the at least one template (10, 10') to the recorded object (1a, 1a') is effected by means of matching and comprises the following partial steps:

• local matching of the template (10, 10') with the recorded object (1a, 1a') - in particular by generation of points (17) of fit with direction vectors (18) and

• global matching using the results of the local matching - in particular based on the points (17) of fit with the direction vectors (18).

2. The method as claimed in claim 1, wherein the determination of the recorded image coordinate (7) by establishing the at least one display image coordinate (8, 8', 8") comprises the following partial steps:

• establishing of the display image coordinate (8, 8', 8"), preferably in discrete steps, in particular pixel by pixel, and

• assignment of the display image coordinate (8, 8', 8") to the corresponding recorded image coordinate (7).

3. The method as claimed in claim 1 or 2, wherein the at least one template (10, 10') is in the form of a segment of the recorded image (4) or of a preceding recorded image.

4. The method as claimed in claim 1 or 2, wherein the at least one template (10, 10') is in the form of an artificially generated pixel image and - in particular - a displacement of the template (10, 10') on the display image (6, 6', 6") in the subpixel range is determined by interpolation.

5. The method as claimed in claim 1 or 2, wherein the at least one template (10, 10') is in the form of a mathematical description of an object and - in particular - the template (10, 10') displayed on the display image is calculated by means of an algorithm.

6. The method as claimed in claim 4 or 5, wherein the at least one template (10, 10') is formed by a basic geometrical shape - for example a line, a polyline, a point, a circle or a rectangle.

7. The method as claimed in any of claims 1 to 6, wherein the calling up of the at least one template (10, 10') is performed under menu control from a selection of predefined and/or predefinable template options (13, 13').

8. The method as claimed in claim 7, wherein the menu-controlled calling up is effected by means of a selection menu (14) comprising a plurality of menu options (15) at least partly graphically representing the template options (13, 13').

9. The method as claimed in any of claims 1 to 8, wherein the positioning of the at least one template (10, 10') on the display image (6, 6', 6") is effected by displacing the template (10, 10') on the display image (6, 6', 6").

10. The method as claimed in any of claims 1 to 8, wherein the positioning of the template (10, 10') on the display image (6, 6', 6") is effected at least partly automatically, comprising the partial steps:

• searching for at least one structure (16) resembling the template (10, 10') on the recorded object (1a, 1a'),

• positioning of the template (10, 10') on at least one structure (16) found.

11. The method as claimed in claim 10, wherein the positioning of the template (10, 10') on at least one structure (16) found is effected by selecting at least one offered structure found.

12. The method as claimed in any of claims 1 to 11, wherein a plurality of templates (10, 10') are positioned in succession on the display image (6, 6', 6") and optionally connected to one another.

13. The method as claimed in any of claims 1 to 12, wherein the determination of the recorded image coordinate (7) by means of at least one characteristic point (11, 11') of the at least one template (10, 10') comprises the following partial steps:

• determination of at least one characteristic point (11, 11') of the at least one template (10, 10'), in particular a point of intersection, a midpoint, an end point or a center,

• selection of a characteristic point (11, 11'), and

• assignment of the characteristic point (11, 11') to a recorded image coordinate (7).

14. The method as claimed in any of claims 1 to 13, wherein the transformation of the recorded image coordinate (7) into at least one geodetic parameter is effected at least using the recorded image coordinate (7) and the angle orientation of the acquisition strip (5) of the recording means (3, 3').

15. The method as claimed in claim 14, wherein the at least one geodetic parameter is formed by at least one solid angle - in particular a horizontal angle and/or a vertical angle.

16. The method as claimed in any of claims 1 to 15, wherein the transformation comprises the partial step:

compensation of optical errors - in particular distortion errors - of the recorded image (4).

17. The method as claimed in claim 16, wherein the compensation of the optical errors is effected by means of an imaging error correction term determined individually - in particular empirically - for the geodetic measuring instrument (2, 2') - in particular a correction function or a correction table.

18. The method as claimed in any of claims 1 to 17, wherein the transformation comprises the partial step:

compensation of temperature-dependent deviations in the assigned recorded image coordinate (7) and/or the determined angle orientation of the acquisition strip (5) of the recording means (3, 3') as a function of a measured temperature.

19. The method as claimed in claim 18, wherein the compensation of the temperature-dependent deviations is effected by means of a temperature correction term determined individually - in particular empirically - for the geodetic measuring instrument (2, 2') - in particular a correction function or a correction table.

20. The method as claimed in any of claims 1 to 19, wherein the transformation is effected using the focus position and/or the imaging scale of an optical unit (19, 19') installed before the electronic recording means (3, 3').

21. The method as claimed in any of claims 1 to 20, wherein the method also comprises the step:

provision of the at least one geodetic parameter, in particular of the at least one solid angle.

22. The method as claimed in claim 21, wherein the provision of the at least one geodetic parameter is effected by visual display, in particular by superposition on the display image (6, 6', 6"), for example via a display window (26).

23. The method as claimed in claim 21 or 22, wherein the provision of the at least one geometric parameter is effected by outputting at least one solid angle to a telemeter (20), comprising the partial steps:

• measurement of a distance of an object point (Q) which is defined by the at least one solid angle, and
• provision of the distance of the object point (Q), in particular by superposition on the display image (6, 6', 6"), for example via a display window (26).

24. An electronic display and control device (31, 31'), having

• electronic calculation means (32, 32'),
• electronic display means (33, 33') for visual display of at least a part of a recorded image (4) in the form of a display image (6, 6', 6") and optionally for visual display of at least one geodetic parameter and
• input means (34, 34') for inputting data - in particular for inputting a display image coordinate (8, 8', 8") - into the calculation means (32, 32'),

comprising firmware with at least one program for carrying out the method as claimed in any of claims 1 to 23.

25. A geodetic measuring instrument (2, 2') for use in a method as claimed in any of claims 1 to 23, having electronic recording means (3, 3') for acquiring a recorded image (4) of at least one object (1) to be geodetically surveyed, comprising an electronic display and control device (31, 31') as claimed in claim 24.

26. A computer program product having a program code, which is stored on a machine-readable medium, for carrying out the method as claimed in any of claims 1 to 23

## Revendications

1. Procédé de mesure géodésique d'un objet (1) qui utilise un appareil géodésique (2, 2') avec des moyens d'enregistrement électroniques (3, 3') pour saisir une image enregistrée (4) au moins de l'objet qui doit faire l'objet d'une mesure géodésique (1), avec les étapes

• détermination de l'orientation angulaire d'une bande de détection (5) des moyens d'enregistrement (3, 3'),

• saisie de l'image enregistrée (4),
• représentation visuelle au moins d'une zone partielle de l'image enregistrée (4) sous forme d'une image d'affichage (6, 6', 6"),
• détermination d'une coordonnée de l'image enregistrée (7) en fixant au moins une coordonnée associée de l'image d'affichage (8, 8', 8") et
• transformation de la coordonnée de l'image enregistrée (7) en au moins une grandeur de mesure géodésique - en particulier un angle spatial ou un angle polaire,

cependant que la détermination de la coordonnée de l'image enregistrée (7) en fixant la coordonnée de l'image d'affichage qui existe au moins (8, 8') comprend les étapes partielles suivantes :

• appel d'au moins un modèle (10, 10') qui modélise au moins partiellement l'objet qui doit faire l'objet d'une mesure géodésique (1),
• positionnement du modèle qui existe au moins (10, 10') sur l'image d'affichage (6, 6', 6"), en particulier en fixant au moins une coordonnée de l'image d'affichage (8, 8', 8"),
• adaptation du modèle qui existe au moins (10, 10') à l'objet qui a été enregistré (1, 1a') et détermination de la coordonnée de l'image enregistrée (7) au moyen d'au moins un point caractéristique (11, 11') du modèle qui existe au moins (10, 10'),

**caractérisé en ce que**
l'adaptation du modèle qui existe au moins (10, 10') à l'objet qui a été enregistré (1, 1a') se fait par matching et comprend les étapes partielles suivantes :

• matching local du modèle (10, 10') avec l'objet enregistré (1a, 1a') - en particulier par la génération de points d'étalonnage (17) avec des vecteurs directionnels (18) et
• matching global en utilisant les résultats du matching local - en particulier sur la base des points d'étalonnage (17) avec les vecteurs directionnels (18).

2. Procédé selon la revendication 1, la détermination de la coordonnée de l'image enregistrée (7) en fixant la coordonnée de l'image d'affichage qui existe au moins (8, 8', 8") comprenant les étapes partielles suivantes :

• fixation de la coordonnée de l'image d'affichage (8, 8', 8"), de préférence en pas discrets, en particulier pixel par pixel et
• association de la coordonnée de l'image d'affichage (8, - 8', 8") à la coordonnée de l'image enregistrée correspondante (7).

3. Procédé selon la revendication 1 ou 2, le modèle qui existe au moins (10, 10' étant configuré comme un fragment de l'image enregistrée (4) ou d'une image enregistrée précédente.

4. Procédé selon la revendication 1 ou 2, le modèle qui existe au moins (10, 10' étant configuré comme une image pixellisée produite artificiellement et - en particulier - un déplacement du modèle (10, 10') sur l'image d'affichage (6, 6'; 6") de l'ordre du subpixel étant déterminé par interpolation.

5. Procédé selon la revendication 1 ou 2, le modèle qui existe au moins (10, 10') étant configuré comme une description mathématique d'un objet et - en particulier - le modèle (10, 10') représenté sur l'image d'affichage étant calculé par un algorithme.

6. Procédé selon la revendication 4 ou 5, le modèle qui existe au moins (10, 10' étant formé par une forme géométrique de base - par exemple une ligne, une polyligne, un point, un cercle ou un rectangle.

7. Procédé selon l'une des revendications 1 à 6, l'appel du modèle qui existe au moins (10, 10') se faisant par menu à partir d'une sélection de modèles de sélection prédéfinis et/ou prédéfinissables (13, 13').

8. Procédé selon la revendication 7, l'appel par menu se faisant à l'aide d'un menu de sélection (14) avec plusieurs points de menu (15) qui représentent graphiquement au moins partiellement les modèles de sélection (13, 13').

9. Procédé selon l'une des revendications 1 à 8, le positionnement du modèle qui existe au moins (10, 10') sur l'image d'affichage (6, 6', 6") se faisant en déplaçant le modèle (10, 10') sur l'image d'affichage (6, 6', 6").

10. Procédé selon l'une des revendications 1 à 8, le positionnement du modèle (10, 10') sur l'image d'affichage (6, 6', 6") se faisant au moins partiellement automatiquement avec les étapes partielles :

• recherche d'au moins une structure (16) semblable au modèle (10, 10') sur l'objet enregistré (1, 1a'),
• positionnement du modèle (10, 10') sur au moins une structure trouvée (16).

11. Procédé selon la revendication 10, le positionnement du modèle (10, 10') sur au moins une structure trouvée (16) se faisant par sélection d'au moins une structure trouvée offerte.

12. Procédé selon l'une des revendications 1 à 11, plusieurs modèles (10, 10') étant positionnés l'un après l'autre sur l'image d'affichage (6, 6', 6") et étant, le cas échéant, reliés entre eux.

**13.** Procédé selon l'une des revendications 1 à 12, la détermination de la coordonnée de l'image enregistrée (7) au moyen d'au moins un point caractéristique (11, 11') du modèle qui existe au moins (10, 10') comprenant les étapes partielles suivantes :

    • détermination d'au moins un point caractéristique (11, 11') d'au moins un modèle (10, 10'), en particulier d'un point d'intersection, d'un point de centre, d'un point d'extrémité ou d'un centre,
    • sélection d'un point caractéristique (11, 11') et
    • association du point caractéristique (11, 11') à une coordonnée de l'image enregistrée (7).

**14.** Procédé selon l'une des revendications 1 à 13, la transformation de la coordonnée de l'image enregistrée (7) en au moins une grandeur de mesure géodésique se faisant au moins en tenant compte de la coordonnée de l'image enregistrée (7) et l'orientation angulaire de la bande de détection (5) des moyens d'enregistrement (3, 3').

**15.** Procédé selon la revendication 14, la grandeur de mesure géodésique qui existe au moins étant formée par au moins un angle spatial, en particulier un angle horizontal et/ou un angle vertical.

**16.** Procédé selon l'une des revendications 1 à 15, la transformation comprenant l'étape partielle : compensation d'erreurs optiques - en particulier des erreurs de distorsion - de l'image enregistrée (4).

**17.** Procédé selon la revendication 16, la compensation des erreurs optiques se faisant au moyen d'un élément de correction des erreurs de représentation déterminées individuellement - en particulier de manière empirique - pour l'appareil de mesure géodésique (2, 2'), en particulier d'une fonction de correction ou d'un tableau de correction.

**18.** Procédé selon l'une des revendications 1 à 17, la transformation comprenant l'étape partielle : compensation de déviations de position dépendant de la température dans la coordonnée associée de l'image enregistrée (7) et/ou de l'orientation angulaire déterminée de la bande de détection (5) des moyens d'enregistrement (3, 3') en fonction d'une température mesurée.

**19.** Procédé selon la revendication 18, la compensation des déviations de position dépendant de la température se faisant au moyen d'un élément de correction de la température déterminé individuellement - en particulier de manière empirique - pour l'appareil de mesure géodésique (2, 2'), en particulier d'une fonction de correction ou d'un tableau de correction.

**20.** Procédé selon l'une des revendications 1 à 19, la transformation se faisant en tenant compte de la position du foyer et/ou de l'échelle de représentation d'une unité optique (19, 19') placée en amont des moyens d'enregistrement électroniques (3, 3').

**21.** Procédé selon l'une des revendications 1 à 20, le procédé présentant en outre l'étape : mise à disposition de la grandeur de mesure géodésique qui existe au moins, en particulier de l'angle spatial qui existe au moins.

**22.** Procédé selon la revendication 21, la mise à disposition de la grandeur de mesure géodésique qui existe au moins se faisant par représentation visuelle, en particulier par affichage dans l'image d'affichage (6, 6', 6"), par exemple par une fenêtre d'affichage (26).

**23.** Procédé selon l'une des revendications 21 à 22, la mise à disposition de la grandeur de mesure géodésique qui existe au moins se faisant par sortie d'au moins un angle spatial sur un télémètre (20) avec les étapes partielles :

    • mesure d'une distance d'un point d'objet (Q) qui est défini par l'angle spatial qui existe au moins et
    • mise à disposition de la distance du point d'objet (Q), en particulier par affichage dans l'image d'affichage (6, 6', 6"), par exemple par une fenêtre d'affichage (26).

**24.** Dispositif d'affichage et de commande électronique (31, 31') avec

    • des moyens de calcul électroniques (32, 32'),
    • des moyens de représentation électroniques (33, 33') pour la représentation visuelle d'au moins une zone partielle d'une image enregistrée (4) sous forme d'une image d'affichage (6, 6', 6") et, le cas échéant, pour la représentation visuelle d'au moins une grandeur de mesure géodésique et
    • des moyens d'entrée (34, 34') pour l'entrée de données, en particulier pour l'entrée d'une coordonnée d'image d'affichage (8, 8', 8") - dans les moyens de calcul (32, 32'),

**caractérisé par** un micrologiciel avec au moins un programme pour exécuter le procédé selon l'une des revendications 1 à 23.

**25.** Appareil de mesure géodésique (2, 2') pour l'utilisation dans un procédé selon l'une des revendications 1 à 23, avec des moyens d'enregistrement électroniques (3, 3') pour saisir une image enregistrée (4) au moins de l'objet qui doit faire l'objet d'une mesure géodésique (1), **caractérisé par** un dispositif d'affichage et de commande électronique (31, 31') selon la revendication 24.

26. Produit de programme d'ordinateur avec code de programme qui est mémorisé sur un support qui peut être lu par une machine pour réaliser le procédé selon l'une des revendications 1 à 23.

Fig. 1

Fig. 2

Fig. 3

Fig. 4

Fig. 5

Fig. 6

Fig. 7

Fig. 8

## EP 1 606 581 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 02130409 A
- JP 03167412 A
- EP 0481278 A
- DE 9007731 U
- EP 01127378 A
- WO 9960335 A
- EP 02022820 A
- DE 19922321 A1

**In der Beschreibung aufgeführte Nicht-Patentliteratur**

- **R. JOECKEL ; M. STOBER.** Elektronische Entfernungs- und Richtungsmessung. Verlag Konrad Wittwer, 1999
- **J.M. RÜEGER.** Electronic Distance Measurement. Springer-Verlag, 1996